# EUROPEAN PATENT SPECIFICATION

(11) **EP 3 450 602 B1**
(45) Date of publication and mention of the grant of the patent: **29.06.2022**
(21) Application number: 18186753.2
(22) Date of filing: 01.08.2018
(51) Int. Cl.: D04H 1/64, A41D 31/00, D04H 13/00

(54) **WADDING STRUCTURE FOR USE AS PADDING, AND METHOD FOR ITS PRODUCTION**
WATTIERUNGSSTRUKTUR ZUR VERWENDUNG ALS POLSTERUNG UND VERFAHREN ZU DEREN HERSTELLUNG
STRUCTURE OUATÉE DESTINÉE À ÊTRE UTILISÉE EN TANT QUE REMBOURRAGE ET SON PROCÉDÉ DE PRODUCTION

(30) Priority: 30.08.2017 IT 201700097547
(43) Date of publication of application: 06.03.2019
(73) Proprietor: Fisi Fibre Sintetiche S.p.A., 23848 Oggiono (LC) (IT)
(72) Inventor: SINISCALCHI, Lucio, 23848 Oggiono - Lecco (IT); SINISCALCHI, Patrizio, 23848 Oggiono - Lecco (IT)
(74) Representative: Rastelli, Franco

(56) References cited:
- EP-A2- 0 365 491
- WO-A1-2006/075341
- WO-A1-2014/080273
- US-A- 5 593 746
- US-A1- 2012 164 200

## Description

### BACKGROUND OF THE INVENTION

The present invention relates to a wadding structure for use as padding, in particular for garments, quilts, and the like, and the method for its production.

Currently, wadding for clothing is treated with a finish made up of a mixture of resins and water, in variable percentages, in order to keep the mass of fibres together and prevent the fibres from coming out of the fabric of which the garments are made during use.

The above finish is prevalently applied via spraying on both sides.

The pressure of the spray entails, however, a reduction in bulk of the wadding and a stiffening of the end product.

Fibres of different nature require spraying of large amounts of finish and call for the use of large amounts of resin to block the fibres inside the product.

Moreover, the finish applied via spraying tends to get scattered inside the ovens, and this entails a major waste of material, as well as high maintenance costs of the plants.

Currently, to obtain a wadding that is able to guarantee durability and that does not have problems of the fibres coming out of the fabric during use of the garments, an amount of at least 15 g of cross-linked resin per square metre is necessary.

It should, however, be considered that the actual consumption of resin is 25-30% higher than the content in the end product.

In fact, the resin applied via spraying, in addition to reaching the wadding, tends to scatter over all the walls of the spray booth, entailing high maintenance costs.

Another important drawback of traditional waddings is represented by the fact that the production process implies a high energy consumption, necessary for drying and cross-linking the wadding.

Typically, an amount of 15 g of resin means, with the traditional methods of production, a scattered amount of 30 g plus another 30 g of water used.

It is consequently necessary to get 60 g of water per square metre of resin product sprayed to evaporate in ovens at a temperature of 150°C-160°C, with a stay time in the ovens of between 2 min 30 s and 3 min.

A further drawback of traditional waddings is represented by the fact that production implies a high environmental impact due to scattering of the resins and to the need for disposal of the residue.

Moreover, traditional wadding, provided with the finish applied by spraying, is relatively stiff as the finish penetrates in depth binding the fibres also inside the body of the wadding.

WO2014/080273 A1 discloses a method of making a thin padding from stabilized fibers, for clothing articles, quilts and sleeping bags comprising a resin applying step that is carried out by a resin foaming machine.

### SUMMARY OF THE INVENTION

The aim of the present invention is to provide a wadding structure for use as padding, in particular for garments, quilts, and the like, and a method for its production that will overcome the drawbacks of the prior art mentioned above.

Within this aim, an object of the invention is to provide a wadding structure that will have a greater bulk as compared to a traditional wadding having the same fibre content.

Another object of the present invention is to provide a wadding structure that will be softer as compared to a traditional wadding.

A further object of the present invention is to provide a wadding structure that will have a surface that is smoother and more uniform and compact as compared to a traditional wadding.

Yet another object of the present invention is to provide a wadding structure that can be produced with a lower energy consumption as compared to a traditional wadding.

Yet a further object of the present invention is to provide a wadding structure that can be produced avoiding any waste of raw material.

The present structure, owing to its peculiar characteristics of production, is very reliable and safe in use.

The above and other objects, which will become more apparent hereinafter, are achieved by a wadding structure according to the subject-matter of claim 1 for use as padding characterized in that it comprises a plurality of fibres bound together by a resin with uniform finish, said finish being more or less dense, the density of the finish entailing a variation of the thickness of the product given the same fibre used, said finish being applied on the surface of the wadding.

The above and other objects, which will become more apparent hereinafter, are moreover achieved by a method of production of a wadding structure (1), characterized in that it comprises the steps of:
- forming a lap of fibres;
- preparing a variable-density resin constituted by aqueous dispersions of one or more polymers by blowing gas into said one or more polymers, the density of the resin varying according to the air pressure, and hence the resin being more or less compact;
- applying said variable-density resin to said lap via a wipe-apply treatment by using an applier kept at variable distances from the lap ranging from 0 to 50 mm and without squeezing said lap; and
- passing said resined lap through an oven to cause evaporation of the water contained in the polymeric dispersion and cross-linking of the variable-density resin.

### BRIEF DESCRIPTION OF THE DRAWINGS

Further characteristics and advantages of the present invention will become more apparent from an examination of the description of a preferred, though non-exclusive, embodiment of the invention, illustrated by way of indicative and non-limiting example in the attached drawings, wherein:

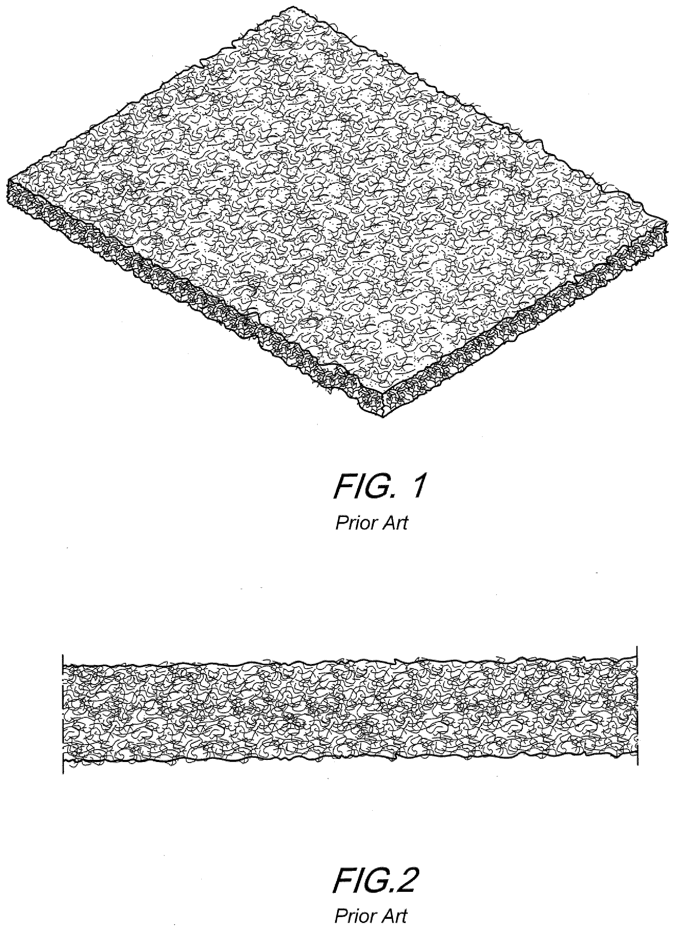

Figure 1 is a perspective view of a lap of wadding according to the prior art;
Figure 2 is a cross-sectional view of the lap of wadding according to the prior art of the previous figure;

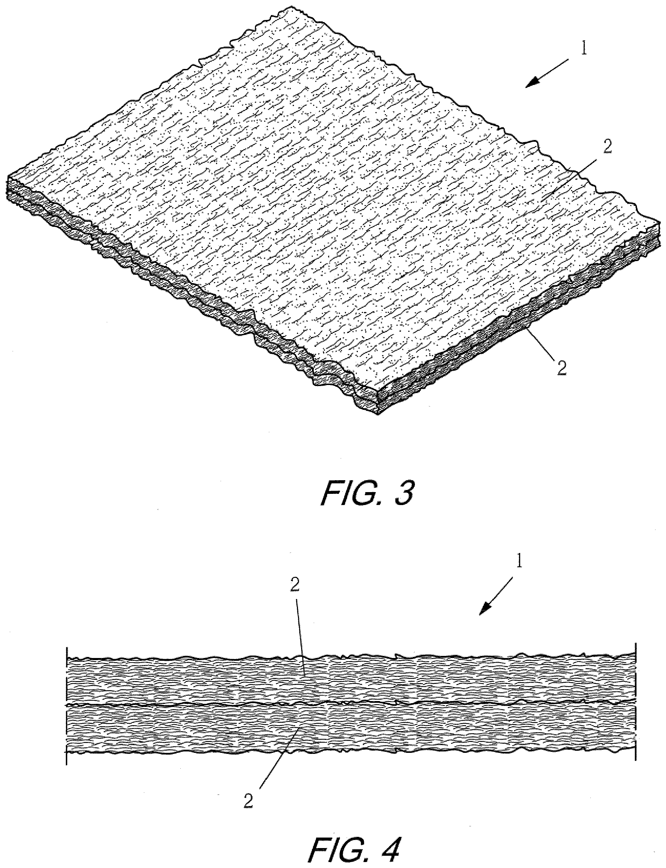

Figure 3 is a perspective view of a lap of wadding according to the present invention; and
Figure 4 is a cross-sectional view of the lap of wadding according to the invention.

### DESCRIPTION OF PREFERRED EMBODIMENTS

With particular reference to the numeric symbols in the aforementioned figures, the wadding structure according to the invention, designated as a whole by the reference number 1, comprises a plurality of fibres 2 bound together by means of a variable-density resin with uniform finish.

The wadding structure 1 of the present invention is produced by providing first a lap of fibres of different type, whether virgin/recycled fibres and/or polyester and/or synthetic and/or natural and/or thermoformable fibres and mixed fibres.

The lap may have various thicknesses (1-60 mm) and weights (20-400 g/m²).

The variable-density resin is constituted by aqueous dispersions of different polymers (acrylic, polyurethane, vinyl, etc.) and is prepared by blowing air into the mixture.

According to the air pressure, the density of the resin may vary and hence the resin may be more or less compact.

Instead of air, also inert and non-flammable gases may be used.

The resin is applied to the lap by means of a wipe-apply treatment.

The wipe-apply treatment uses an applier kept at variable distances from the lap, ranging from 0 mm to 50 mm, depending on the nature of the fibres of the wadding and on the density of the variable-density resin.

In this way, a uniform layer of resin of different density is directly applied on the surface fibres of the wadding, thus creating a uniform and soft layer of resin, which has the purpose of binding the surface fibres and preventing exit of the fibres contained in the wadding.

This method is such that the resin will not penetrate into the lap, hence leaving the internal fibres free to move, whereas the surface fibres are well bound together to form a uniform surface of resin that does not allow the internal fibres to come out.

It is very important in this step not to squeeze the lap so as to maintain the thickness of the lap itself and hence its capacity of thermal insulation.

The lap thus resined is made to pass through an oven at temperatures of between 110°C and 200°C, at a rate of 1-30 m/min, so as to cause the water contained in the polymeric dispersion to evaporate and at the same time enable cross-linking of the variable-density resin. This step provides stability and uniformity of the finish.

The product thus obtained has a greater thickness, as the lap is not squeezed either mechanically or by the pressure of the resin spray. This makes it possible to obtain a product with a thickness 30% greater than that of a product having the same weight-to-thickness ratio, produced with the traditional resin-spraying technique.

The product thus obtained has a higher thermal insulation as compared to a wadding produced with the traditional resin-spraying technique.

The softness of the product according to the present invention is due to the uniformity of the variable-density resin, which is in direct contact with the surface, unlike a wadding produced in a traditional way where the resin tends to scatter over the surface and penetrate into the lap itself.

The smoother surface of the wadding of the present invention enables also use of thinner fabrics.

From an observation of this wadding in cross section, it may be noted how the surface fibres are well bound by the film of variable-density resin, whereas the internal fibres are free and soft.

Instead, with the traditional resin-spraying technique, the fibres both on the surface and inside the wadding are bound by droplets of resin, which tend to stiffen the structure.

The thickness of the film of variable-density resin according to the present invention may be regulated so as to affect both breathability and softness of the product.

By using special resins it is also possible to create a film with characteristics of water-repellence, which may be useful for the final use.

The wadding structure according to the present invention provided with variable-density finish makes it possible to prevent any waste of raw material and reduce maintenance costs.

In fact, the structure according to the present invention entails savings in consumption for the ovens of approximately 30%, as the amount of water to be evaporated per square metre of wadding is just 40-45 g.

The structure according to the present invention is softer as the finish is evenly distributed only over the surface.

The present wadding, provided with the uniform variable-density finish, has a surface that is smoother and more uniform and compact.

This may be noted by observing the product in cross section.

The variable-density finish may have a higher or lower density according to the need. The density of the finish entails a variation of the thickness of the product, which on average can guarantee a bulk that is 30% greater than that of a wadding produced in a traditional way with resin-spraying finish.

A greater bulk of the product entails a greater heat value, typically approximately 20% greater, as it is precisely the amount of air embedded in the structure of the wadding that determines its thermal insulation.

The present wadding structure, which is not subjected to the stresses of spraying, has a greater amount of air embedded therein.

Traditional wadding, provided with spray finish, has a bulk approximately 30% less than that of the structure according to the present invention. Said low bulk of traditional wadding is due to the pressure exerted by the spray.

Instead, according to the present invention, given that the mass of fibres is not exposed to the pressure of the spray from both sides, it maintains the original bulk, i.e., the one that it had at output from the production machinery.

This leads to a greater warmth given the same weight as compared to waddings currently present on the market, as it is possible to embed a greater amount of air, which is the best thermal insulator.

It is possible to preserve the original softness and bulk of the fibres as they do not undergo the stress due to the pressure of the spray.

The traditional finish, applied via spray, covers 50% of the surface of the wadding, whereas the variable-density finish covers 100% of the surface.

Consequently, the wadding is more retained as compared to the traditional product, and it is thus possible to combine it with a wider range of fabrics, such as open-mesh fabrics, non-downproof fabrics, machine-knitted fabrics, stretch fabrics, and other types of fabric still, markedly limiting or eliminating altogether any possible exit of the fibres from the garments and eliminating the need to use non-woven fabrics.

Given the nature of the structure of the wadding and of the variable-density finish, the product is stronger and more durable also when washed at suitable temperatures.

As compared to spray application of the finish, the variable-density finish enables increase in the production rate.

Moreover, the costs of the finishing material are reduced as one third of the resin or other is used as compared to the amount used for the traditional product since scattering of the product sprayed is eliminated.

The new product proves to be more ecological because the expenditure of finishing materials and energy is reduced to one third.

The product is cross-linked very rapidly owing to the nature of the finish applied.

The oven may be used at a temperature of from 40°C to 200°C, and the stay time may range from a few seconds to a few minutes.

The finish may be more or less transpirant according to the need; it may be of various nature (natural and/or synthetic, artificial or of some other nature, with single or mixed polymers).

The variable-density finish is applied on the surface of the wadding without modifying the finishing and enzymes and/or other characteristics of the fibres themselves.

Fibres of different nature may be mixed together and enveloped within the same mass.

The fibres used to obtain the new wadding may be of different denier and may be siliconed or non-siliconed fibres, curled or non-curled fibres, parallelized or non-parallelized fibres, virgin or recycled fibres and/or other fibres still.

The fibres used may be made up of a number of elements, with a number of components, and with finishings of various nature.

The wadding may be made up of stretch fibres with uni-directional, bidirectional, or multi-directional elasticity, three-dimensional elasticity, etc.

The product may be made up of fibres of different nature (natural, artificial, and/or synthetic) and may be a mixture of two or more fibres in various percentages.

The finish can be applied on carded and non-carded fibres and/or other fibres.

In practice, it has been found that the invention achieves the intended aim and objects.

Of course, the materials used, as well as the dimensions, may be any according to the requirements.

## Claims

1. A wadding structure for use as padding obtained by the method according to claims 4-9, **characterized in that** it comprises a plurality of said fibres (2) bound together by said resin with uniform finish; said finish being more or less dense; the density of the finish entailing a variation of the thickness of the product given the same fibres used; said finish being applied on the surface of the wadding.

2. The wadding structure according to Claim 1, **characterized in that** said variable-density finish covers 100% of the surface.

3. A method for production of a wadding structure (1), **characterized in that** it comprises the steps of:
- forming a lap of fibres;
- preparing a variable-density resin constituted by an aqueous dispersion of one or more polymers by blowing gas into said one or more polymers, the density of the resin varying according to the air pressure, and hence the resin being more or less compact;
- applying said variable-density resin to said lap by means of a wipe-apply treatment by using an applier kept at variable distances from the lap ranging from 0 to 50 mm and without squeezing said lap; and
- passing said resined lap through an oven to cause evaporation of the water contained in the polymeric dispersion and cross-linking of the variable-density resin.

4. The method according to Claim 3, **characterized in that** said fibres comprise fibres of a virgin or recycled type and/or polyester and/or synthetic and/or natural and/or thermoformable fibres and mixed fibres.

5. The method according to Claim 3, **characterized in that** said lap has a thickness of between 1 and 60 mm or more and a weight of from 20 to 400 g/m².

6. The method according to Claim 3, **characterized in that** said polymers comprise acrylic and/or polyurethane and/or vinyl polymers.

7. The method according to Claim 3, **characterized in that** said gas comprises air or inert and non-flammable gases.

8. The method according to Claim 3, **characterized in that** said resined lap is passed through an oven at temperatures of between 110°C and 200°C, at a rate of 1 to 30 m/min.

## Patentansprüche

1. Wattierungsgebilde zur Verwendung als Einlagematerial, das durch das Verfahren den Ansprüchen 4-9 entsprechend erhalten wird, **dadurch gekennzeichnet, dass** es eine Mehrzahl der Fasern (2) umfasst, die durch das Harz mit einer gleichförmigen Appretur zusammengebunden sind; wobei die Appretur mehr oder weniger dicht ist; wobei die Dichte der Appretur bei Verwendung derselben Fasern eine Variation der Dicke des Produkts mit sich bringt; wobei die Appretur auf die Oberfläche der Wattierung aufgebracht wird.

2. Wattierungsgebilde nach Anspruch 1, **dadurch gekennzeichnet, dass** die Appretur variabler Dichte 100% der Oberfläche bedeckt.

3. Verfahren für die Herstellung eines Wattierungsgebildes (1), **dadurch gekennzeichnet, dass** es die Schritte umfasst des:
- Bildens eines Wickels von Fasern,
- Herstellens eines Harzes variabler Dichte, das aus einer wässrigen Dispersion eines oder mehrerer Polymere durch Blasen von Gas in das eine oder die mehreren Polymere gebildet wird, wobei die Dichte des Harzes je nach dem Luftdruck variiert und das Harz daher mehr oder weniger kompakt ist;
- Aufbringens des Harzes variabler Dichte auf den Wickel mittels einer Wischauftragsbehandlung durch Verwenden einer Auftragvorrichtung, die in variablen Abständen von 0 bis 50 mm von dem Wickel und ohne Zusammendrücken des Winkels gehalten wird; und
- Hindurchführens des beharzten Wickels durch einen Ofen, um Verdampfung des in der Polymerdispersion enthaltenen Wassers und Vernetzen des Harzes variabler Dichte zu verursachen.

4. Verfahren nach Anspruch 3, **dadurch gekennzeichnet, dass** die Fasern Fasern eines fabrikneuen oder wiederaufbereiteten Typs und/oder Polyester und/oder synthetische und/oder natürliche und/oder thermoformbare Fasern und gemischte Fasern umfassen.

5. Verfahren nach Anspruch 3, **dadurch gekennzeichnet, dass** der Wickel eine Dicke zwischen 1 und 60 mm oder mehr und ein Gewicht von 20 bis 400 g/m² aufweist.

6. Verfahren nach Anspruch 3, **dadurch gekennzeichnet, dass** die Polymere Acryl- und/oder Polyurethan- und/oder Vinylpolymere umfassen.

7. Verfahren nach Anspruch 3, **dadurch gekennzeichnet, dass** das Gas Luft oder inerte und nicht entflammbare Gase umfasst.

8. Verfahren nach Anspruch 3, **dadurch gekennzeichnet, dass** der beharzte Wickel durch einen Ofen bei Temperaturen zwischen 110°C und 200°C mit einer Rate von 1 bis 30 m/min geführt wird.

## Revendications

1. Structure ouatée destinée à être utilisée comme rembourrage obtenue par le procédé selon les revendications 4 à 9, **caractérisée en ce qu'**elle comprend une pluralité desdites fibres (2) liées entre elles par ladite résine avec une finition uniforme; ladite finition étant plus ou moins dense; la densité de la finition entraînant une variation de l'épaisseur du produit compte tenu des mêmes fibres utilisées; ladite finition étant appliquée sur la surface de la ouate.

2. Structure ouatée selon la revendication 1, **caractérisée en ce que** ladite finition de densité variable recouvre 100% de la surface.

3. Procédé de production d'une structure ouatée (1), **caractérisé en ce qu'**il comprend les étapes consistant à:
- former une nappe de fibres;
- préparer une résine de densité variable constituée par une dispersion aqueuse d'un ou plusieurs polymères en insufflant du gaz dans ledit ou lesdits polymères, la densité de la résine variant en fonction de la pression de l'air, et par conséquent la résine étant plus ou moins compacte;
- appliquer ladite résine de densité variable sur ladite nappe au moyen d'un traitement d'application par effleurement en utilisant un applicateur maintenu à des distances variables de la nappe comprises dans la plage allant de 0 à 50 mm et sans presser ladite nappe; et
- passer ladite nappe enduite de résine dans un four pour provoquer l'évaporation de l'eau contenue dans la dispersion polymère et la réticulation de la résine de densité variable.

4. Procédé selon la revendication 3, **caractérisé en ce que** lesdites fibres comprennent des fibres d'un type vierge ou recyclé et/ou des fibres de polyester et/ou synthétiques et/ou naturelles et/ou thermoformables et des fibres mixtes.

5. Procédé selon la revendication 3, **caractérisé en ce que** ladite nappe a une épaisseur comprise entre 1 et 60 mm ou plus et un poids allant de 20 à 400 g/m².

6. Procédé selon la revendication 3, **caractérisé en ce que** lesdits polymères comprennent des polymères acryliques et/ou de polyuréthane et/ou vinyliques.

7. Procédé selon la revendication 3, **caractérisé en ce que** ledit gaz comprend de l'air ou des gaz inertes et ininflammables.

8. Procédé selon la revendication 3, **caractérisé en ce que** ladite nappe enduite de résine est passée dans un four à des températures comprises entre 110°C et 200°C, à une vitesse de 1 à 30 m/min.
